# EUROPEAN PATENT APPLICATION

(11) **EP 4 846 823 A1**
(43) Date of publication of application: **02.12.2026**
(21) Application number: 25305776.4
(22) Date of filing: 28.05.2025
(51) Int. Cl.: A01B 69/00, A01B 69/04, A01D 75/18

(54) **WORK MACHINE**

(71) Applicant: Kubota Corporation, Osaka-shi, Osaka 530-0011 (JP)
(72) Inventor: ZERBINO, Fulvio, 60800 Crépy-en-Valois (FR)
(74) Representative: Cabinet Beau de Loménie

(57) **Abstract**

A work machine (2) configured to operate in combination with a work vehicle (1), the work machine (1) comprising a work machine electronic control unit (5) configured to send a command signal (3) according to a first mode (17) to the work vehicle (1), the work vehicle (1) being configured to be operated according to said signal command (3),
wherein the work machine electronic control unit (5) is configured to receive an obstacle detection signal (18) , said obstacle detection signal (18) corresponding to a detection of an obstacle (7) in a detection area (14) around the work vehicle (1), and to send the command signal (3) according to a second mode (21) in response to reception of the obstacle detection signal (18).

## Description

### 1. Field of the invention

The present disclosure relates generally to the field of work vehicles. More specifically, the present disclosure relates to a system for controlling operation of a work vehicle in combination with a work machine in a tractor implement management (TIM) system.

### 2. Description of Related Art

A work vehicle, such as a tractor, is typically operated in combination with one or more work machines, such as an agricultural implement, in order to carry out and/or perform farm work. Accordingly, the work vehicle may be retrofitted and/or customized with the work machine in order to carry out and/or perform automatically an intended form of farm work according to instructions received from the work machine. Such farm work may be, for example, soil cultivation, planting, fertilizing, irrigation, harvesting, and/or hay making.

In such a combination between a work vehicle and a work machine, it is common that work vehicles and work machines of different manufacturers are combined with each other. It has been promulgated and established that connection and compatibility between work vehicles and work machines of different manufacturers is possible. As such, international standard ISO 11783 (ISOBUS), based on a control area network (CAN), has been developed as a communication protocol for the agriculture industry. Particularly, ISO 11783 defines a communication protocol for exchanging, between a work vehicle and a work machine, data concerning operation of the work vehicle and/or the work machine.

Many modern work vehicles and work machines also typically include a tractor implement management (TIM) system. The TIM system is an ISOBUS-based solution for a cross-manufacturer agricultural technology system, which may enable a work machine to control certain operation and/or functions of the work vehicle and vice versa. More specifically, the TIM system allows for interactive communication between the work vehicle and the work machine, such that a command signal from the work machine may be received by the work vehicle in order for the work machine to carry out, for example, automatic speed control of the work vehicle, automatically grass collection, etc.

However, in a work vehicle and work machine combination in which the work machine automatically controls at least some functions of the work vehicle, the work vehicle and work machine combination must constantly be under survey of an operator while the work vehicle and/or the work machine perform farm work and the operator have to interact with the work vehicle and/or the work machine to avoid unsafe situations which could occur if the operator lacks of appropriate oversight of the farm work.

It is desirable to provide an improved work machine for automatically controlling operations of a work vehicle in combination with the work machine without involving unsafe working conditions.

### SUMMARY

The aim of the invention is to provide a work machine working in combination with a work vehicle and ensuring safe conditions during operations such as farm work or other agricultural work. Particularly, the aim of the invention is to automatically prevent unsafe condition while automatically operating the work vehicle and/or the work machine according to work machine instructions. The aim of the invention is to avoid, or at least reduce, constant oversight of the operator while automatically operating the work vehicle and/or the work machine according to work machine instructions.

In this respect, the present disclosure relates to a work machine configured to operate in combination with a work vehicle, the work machine comprising a work machine electronic control unit configured to send a command signal according to a first mode to the work vehicle, the work vehicle being configured to be operated according to said command signal, wherein the work machine electronic control unit is configured to receive an obstacle detection signal, said obstacle detection signal corresponding to a detection of an obstacle in a detection area around the work vehicle, and to send the command signal according to a second mode in response to reception of the obstacle detection signal.

The work machine is usually configured to send the command signal according to the first mode, which is a mode for traditional use of the combination between the work machine and the work vehicle. However, as the work machine is unaware of the obstacle in the vicinity of the work vehicle, a dangerous situation may occur if an obstacle, such as a bystander, is detected in the vicinity of the work vehicle. According to the invention, when an obstacle is detected in the detection area around the work vehicle and a corresponding obstacle detection signal is received by the work machine electronic control unit, the work machine switch from sending the command signal to the work vehicle according to the first mode, corresponding to usual command signal, to send said command signal according to the second mode, corresponding to a command signal aiming to alert an operator that the obstacle is in the detection area and therefore prevent unsafe situations and ensure safety of the work vehicle and/or the detected obstacle.

According to embodiments of the invention, the work machine may have the following features, alone or in combination.

The work machine is preferably an implement of a tractor implement management (TIM) system, for example a front sprayer, a baler, a spreader a TIM auto steering system or any other work machine able to send the command signal to the work vehicle, for example a tractor. Preferably, the work vehicle is also part of a tractor implement management (TIM) system.

The command signal may comprise a plurality of data, i.e. instructions, to operate the work vehicle.

According to an embodiment, the command signal comprises a front work function command intended to command a work function of a front work device embedded in the work vehicle, said front work device being arranged in a front part of the work vehicle. According to an embodiment, the command signal comprises a rear work function command intended to command a work function of a rear work device embedded in the work vehicle, said rear work device being arranged in a rear part of the work vehicle. In an embodiment, the signal command comprises a speed command, a vehicle electronic control unit being configured to steer the work vehicle according to said speed command in the first mode.

The second mode may comprise a plurality of functions to ensure safety of the work vehicle's operations.

According to an embodiment, the work vehicle comprises at least one obstacle sensor configured to detect the obstacle. According to an embodiment, the obstacle sensor is configured to detect a distance between the work vehicle and the obstacle, the vehicle electronic control unit being configured to send data related to the obstacle to the work machine, for example with the obstacle detection signal. Such data related to the obstacle may be, for example, a size, a distance from the work vehicle, a speed, a trajectory, etc.

According to an embodiment, the work vehicle comprises a display. According to an embodiment, the command signal according to the second mode comprises a display instruction. The display instruction may be, for example, an instruction to display a distance between the work vehicle and the obstacle, the obstacle speed and/or trajectory if the obstacle is moving, the obstacle size, a trajectory avoiding the obstacle, or any other relevant information to alert the operator on the obstacle data received with the obstacle detection signal.

According to an embodiment, the command signal according to the second mode comprises the speed command according to the first mode, i.e. the speed command remains unchanged between the first mode and the second mode. In fact, the second mode mainly intends to alert the operator as the obstacle has been detected in the detection area and is still far from the work vehicle such that the work vehicle can be operated in safe conditions even by applying the first mode main instructions. However, to ensure safety of the work vehicle operating, it is mandatory to alert the operator that the obstacle has been detected. Thus, the second mode's main goal is to provide information regarding the obstacle or advice to avoid the obstacle while still applying the work vehicle main operations corresponding to the command signal according to the first mode.

According to an embodiment, the work machine electronic control unit is configured to switch from sending the command signal according to the second mode to sending the command signal according to the first mode in response to an end of obstacle detection signal reception. In other words, when the obstacle is not detected in the detection area and has been identified as being outside of the detection area, the end of obstacle detection signal is received by the work machine which therefore return to the usual mode by switching to the command signal according to the first mode.

According to an embodiment, the work machine electronic control unit is configured to receive an obstacle warning signal, said obstacle warning signal corresponding to a detection of the obstacle in a warning area included in the detection area, and to send the command signal according to a third mode in response to reception of the obstacle warning signal.

In other words, in this embodiment, the work machine is configured to send the signal command in the first mode if the obstacle is detected outside the detection area, or if no obstacle is detected, in the second mode if the obstacle is detected inside the detection area and outside the warning area and in a third mode if the obstacle is detected inside the warning area.

The warning area is included in the detection area such that an obstacle detected inside the warning area is closer to the work vehicle than an obstacle detected inside the detection area and outside the warning area. Thus, the second mode is dedicated to inform the operator that an obstacle has been detected but is still at a safe distance from the work vehicle, as explained above, whereas the third mode is dedicated to send a command signal which ensures safe operating of the work vehicle by automatically operating the work vehicle according to safety operation defined by said third mode as the obstacle is closer from the work vehicle.

If the warning area is equal to the detection area, then the work machine receives directly the obstacle warning signal, i.e. receiving simultaneously or without receiving the obstacle detection signal, and then switch from sending the command signal according to the first mode to sending said command signal according to the third mode.

This third mode can comprise a plurality of commands to ensure safe operations of the work vehicle.

According to an embodiment, the command signal according to the third mode comprises a safe speed command, the vehicle electronic unit being configured to operate the work vehicle according to said safe speed command.

Such a safe speed command can be defined according to a plurality of embodiments.

According to an embodiment, the safe speed command is a preset speed.

According to an embodiment, the safe speed command is a speed ratio. According to an embodiment, the work machine electronic control unit is configured to define the safe speed by applying a speed ratio to the speed command from the first mode.

According to an embodiment, the safe speed command comprises a deceleration parameter. In this embodiment, the vehicle electronic control unit is configured to operate the work vehicle from the current speed to the speed corresponding to the safe speed command by applying the corresponding deceleration, i.e. progressively slowing the work vehicle speed.

According to an embodiment, the command signal according to the third mode comprises a warning command. The warning command depends on the warning devices embedded in the work vehicle. In an embodiment, the warning command comprises an instruction for displaying on the display embedded in the work vehicle a warning. Such an instruction can comprise, for instance, a trajectory to avoid the obstacle, an action to perform such as sending a warning to the obstacle; emitting a warning sound signal or a warning light signal, for instance if the obstacle is a bystander walking in the warning area, or any other action which could be automatically performed or that an operator could take in reaction to the detection of the obstacle in the warning area.

According to an embodiment, the command signal according to the third mode comprises a safety Front power take off (FPTO) command and/or a safety (RPTO) Rear power take off rpm command. Similarly to the safety speed command, the safety FPTO rpm command and/or the safety RPTO rpm command may be a fixed FPTO rpm or RPTO rpm or a ratio and may be applied directly or progressively, for example with a decrease parameter.

According to an embodiment, the work machine electronic control unit is configured to switch from sending the command signal according to the third mode to sending the command signal according to the second mode in response to an end of obstacle warning signal reception. In the embodiment wherein the warning area is equal to the detection area, the work machine electronic control unit is configured to switch from sending the command signal according to the third mode to sending the command signal according to the first mode in response to an end of obstacle warning signal reception.

According to an embodiment, the work machine is configured to perform a dedicated work, and the work machine electronic control unit is configured to perform said dedicated work in a limited mode in response to the reception of the obstacle warning signal.

According to an embodiment, the work machine electronic control unit is configured to receive an obstacle critical signal and to send the command signal according to a fourth mode in response to reception of the obstacle critical signal.

In other words, the command signal is according to the fourth mode if the work machine electronic control unit receive the obstacle critical signal, corresponding to a detection of the obstacle in the critical area, according to the third mode if the work machine electronic control unit receive the obstacle warning signal, corresponding to a detection of the obstacle in the warning area, according to the second mode if the work machine electronic control unit receive the obstacle detection signal, corresponding to a detection of the obstacle in the detection area, and according to the first mode if the work machine electronic control unit does not receive any obstacle signal or an obstacle signal corresponding to the detection of the obstacle outside of the detection area.

The critical area is included in the warning area, and therefore also in the detection area, such that an obstacle detected in the critical area is closer to the work vehicle than an obstacle detected in the warning area but outside of the critical area.

Thus, the command signal according to the second mode is dedicated to inform the operator that an obstacle has been detected but is still at a safe distance from the work vehicle, the command signal according to the third mode is dedicated to operate the work vehicle safely and anticipate a collision between the obstacle and the work vehicle and the command signal according to the fourth mode is dedicated to avoid an imminent safety risk as the obstacle is almost in contact with the work vehicle.

This fourth mode may comprise a plurality of commands to ensure safe working operation of the work vehicle.

According to an embodiment, the command signal according to the fourth mode comprises a critical speed command.

Such a critical speed command may be any speed instruction that ensures that even if the obstacle is almost in contact with the work vehicle, the work vehicle will not perform any action/movement involving a collision between the work vehicle and the obstacle.

According to an embodiment, the critical speed command comprises an instruction to operate the work vehicle at a standstill speed. Such a standstill speed is defined for each work vehicle as a speed below a threshold for which a bystander can clearly detect motions of the work vehicle. In other words, a standstill speed is a speed above zero but for which motion of the work vehicle is not detected by a bystander.

According to an embodiment, the critical speed command comprises an instruction to operate the work vehicle at the minimum possible speed of the work vehicle.

According to an embodiment, the critical speed command comprises an instruction to stop the work vehicle, i.e. an instruction to set the work vehicle speed at zero (0.00 km/h). According to an embodiment, the command signal according to the fourth mode comprises an instruction to engage an assisted parking brake of the work vehicle. The assisted parking brake may be an Electronic parking brake (EPB) or an automated parking brake (APB)

According to an embodiment, the work machine is configured to perform a dedicated work, and the work machine electronic control unit is configured to perform said dedicated work in a critical mode in response to the reception of the obstacle critical signal. For example, the command signal according to the fourth mode may comprise instruction to block a front part and/or a rear part movement of the work vehicle, such as blocking the movements of a device performing an agricultural work.

According to an embodiment, the command signal according to the fourth mode comprises an instruction to switch off a FPTO or a RPTO.

According to an embodiment, the command signal comprises work function instructions, the vehicle electronic control unit being configured to apply said work function instruction if the obstacle is detected outside the critical area, i.e. in the first, second or third mode. In a preferred embodiment, the vehicle electronic control unit is configured to not operate said work function and to ask for an operator confirmation if the command signal is according to the fourth mode.

According to an embodiment, the work machine comprises a memory, i.e. a storage device, configured to store any relevant information. Such a memory can be configured to register obstacle data. Such obstacle data can comprise data regarding an obstacle trajectory, an obstacle speed, an obstacle size or any other parameter of the obstacle. According to an embodiment, the safety speed and/or the critical speed is registered in the memory.

The detection area is defined by a detection range. Similarly, the warning area is defined by a warning range and the critical area is defined by a critical range. The critical range is lower or equal to the warning range and the warning range is lower or equal to the detection range. The areas, i.e. detection area and/or warning area, and/or critical area, are to be understood as 3D areas, for example spherical areas surrounding the work vehicle.

According to embodiments, the fourth mode can include at least one function of the third mode and/or at least one function of the second mode. According to embodiments, the third mode can include at least one function of the second mode.

The invention also provides a method for operating a work vehicle in a tractor implement management system, the work vehicle comprising a vehicle electronic control unit, wherein the method comprises,
- providing a work machine, said work machine comprising a work machine electronic control unit configured to communicate with the vehicle electronic control unit, the work machine being configured to send a signal command according to a first mode to the work vehicle,
- receiving an obstacle detection signal in the work machine electronic control unit, said obstacle detection signal corresponding to a detection of an obstacle in a detection area around the work vehicle,
- sending the signal command according to a second mode from the work machine electronic control unit to the work vehicle.

According to embodiments of the invention, the method for operating the work vehicle can have the following features, alone or in combination.

According to an embodiment, the method comprises:
- receiving an obstacle warning signal in the work machine electronic control unit, said obstacle warning signal corresponding to a detection of the obstacle in a warning area included in the detection area,
- sending the signal command according to a third mode from the work machine electronic control unit to the work vehicle.

According to an embodiment, the method comprises:
- receiving an obstacle critical signal in the work machine electronic control unit, said obstacle critical signal corresponding to a detection of an obstacle in a critical area included in the warning area,
- sending the signal command according to a fourth mode from the work machine electronic control unit to the work vehicle.

According to embodiments, the command signal may have any of the above-mentioned features and/or instructions, such as the display command, the warning command, a speed command, etc.

According to an embodiment, the work vehicle comprises an obstacle sensor configured to detect the obstacle in the detection area. The obstacle sensor may be any sensor configured to detect an obstacle, such as a camera, a stereo camera, a radar, a lidar, or any other type of sensor able to detect an obstacle in the vicinity of the work vehicle. For example, the obstacle sensor may include a camera pointing to the sky, e.g. to avoid that the work vehicle hits electrical wires. Moreover, the obstacle sensor may include any number of sensors depending on the work vehicle. As an example, if the work vehicle is a tractor to which is attached a long agricultural machine to be towed in a field, the obstacle sensor may include a first sensor mounted on a front and/or top side of the tractor while a second sensor is mounted on a rear side of said long agricultural machine. In such a work vehicle including a long agricultural machine, the detection area may have any shape allowing obstacle detection in the vicinity of said work vehicle.

The vehicle electronic control unit is configured to, in response to the obstacle detection in the detection area by the obstacle sensor, send the obstacle detection signal to the work machine electronic unit.

According to an embodiment, the detection area includes a warning area and the obstacle sensor configured to detect the obstacle in the warning area. The vehicle electronic control unit is configured to, in response to the obstacle detection in the warning area by the obstacle sensor, send the obstacle warning signal to the work machine electronic unit.

According to an embodiment, the warning area includes a critical area and the obstacle sensor configured to detect the obstacle in the critical area. The vehicle electronic control unit is configured to, in response to the obstacle detection in the critical area by the obstacle sensor, send the obstacle critical signal to the work machine electronic unit.

In the manner described and according to aspects illustrated herein, the work vehicle and the method for controlling a work vehicle are contemplated to provide safety to improve the ability of a work vehicle to operate automatically in combination with a work machine and to operate said work vehicle safely, preferably without requiring an operator oversight. Indeed, the work machine is configured to determine operating modes in which safety is ensured despite according to reception of corresponding obstacle detection, warning or critical signals. Consequently, the work vehicle and the method provide for improved safety in the operation of said work vehicle and work machine combination.

### BRIEF DESCRIPTION OF THE DRAWINGS

Aspects of an embodiment will be described in reference to the drawings, where like numerals reflect like elements:
- Figure1 is a schematic view of a work vehicle working in combination with a work machine for controlling a work vehicle using a work machine;
- Figure 2 is a diagram showing the modes for operating the work vehicle depending on the obstacle signals received by the work machine when a bystander is approaching the work vehicle;
- Figure 3 is a diagram showing the modes for operating the work vehicle depending on the end of obstacle signals received by the work machine when the bystander is moving away from the work vehicle.

### DETAILED DESCRIPTION

Although the present disclosure herein has been described with reference to particular embodiments, it is to be understood that these embodiments are merely illustrative of the principles and applications of the present disclosure.

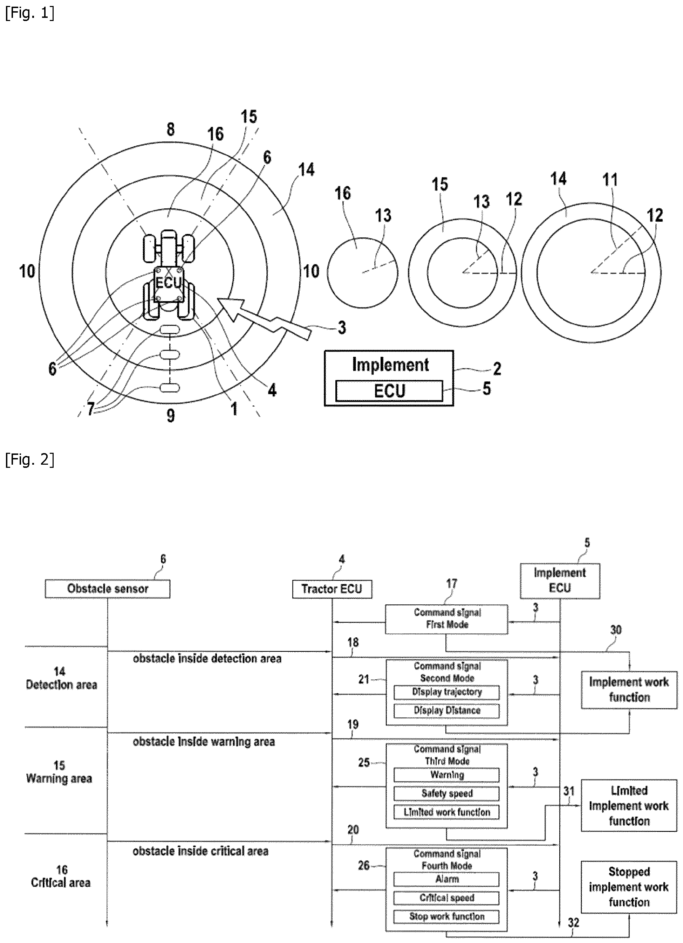

Figure 1 shows a work vehicle 1 working in combination with a work machine 2.

The work vehicle 1 is an agricultural vehicle and/or work vehicle such as a tractor 1 as shown in Figure 1 and in the following description. The tractor 1 is intended to perform an agricultural work, or farm work, in an agricultural field by operating instructions received from the work machine 2, also named implement 2 as usual in the TIM language and in the following description.

In figure 1, tractor 1 is configured for use in combination with a single implement 2. However, it is contemplated that the tractor 1 may be configured to be used with a plurality of implements 2.

Implement 2 is an agricultural machine and/or work machine. Particularly, in the disclosed embodiment, implement 2 is configured to perform a work function and/or the farm work. It is contemplated that the term "work function" as used herein may be understood as a farm work activity, such as collecting grass, baling, plowing, tilling, spraying, swathing, and the like. As such, implement 2 may be a baler, a plow, a tiller, a seeder, a sprayer, a swather, and/or the like. Implement 2 may also be another tractor or a drone or any other work device which is configured to send a command signal 3 to tractor 1 for operating said tractor 1. As an example, implement 2 may be an autosteering system in which the work function is the tractor's wheels steering control. Such an implement 2 may generate and send speed commands and/or curvature commands to the tractor 1.

Tractor 1 and implement 2 are configured to communicate, for example, using the international standard ISO 11783, which is called ISOBUS and based on a control area network (CAN).

Tractor 1 and implement 2 may each be a part of a tractor implement management (TIM) system. It is contemplated that a TIM system as referred to herein may be understood to be an ISOBUS-based agricultural technology system enabling compatibility and interactive communication between the tractor 1 and the implement 2, which may each be products that are different in manufacturer. In the disclosed embodiment, certain operations of tractor 1 may be determined by implement 2. Tractor 1 may be understood as an owner of TIM functions, and thereby referred to herein as a "TIM server." Implement 2 may be understood as a generator of TIM commands, i.e. the command signal 3, and thereby referred to herein as a "TIM client.". Thus, implement 2 sends the command signal 3 to tractor 1 in order to operate said functions of tractor 1 according to the command signal 3.

In the case, given as an example, of an implement 2 as a baler, said baler may send the command signal 3 to tractor 1 depending on the current situation of said baler. For example, if the baler is not full, the command signal 3 may comprise a steering command for steering the work vehicle while collecting grass. Once the baler is full, the command signal 3 may comprise a stop instruction and then an acceleration command to help the baler to unload its loading.

Tractor 1 comprises an electronic control unit 4, hereafter named tractor ECU 4, configured to communicate with an implement electronic control unit 5, hereafter named implement ECU 5. Especially, the tractor ECU 4 is configured to receive the command signal 3 from implement ECU 5 and operate tractor 1, i.e. TIM functions, according to instructions corresponding to the command signal 3. The Implement ECU 5 is configured to generate and /or send the command signal 3 to the tractor ECU 4. It is contemplated that the implement ECU 5 transmits the command signal 3 to the tractor ECU 4 via a wired connection, a wireless connection, or any other manner of transmitting information and the command signal 3.

Tractor 1 includes one or more obstacle sensor 6, four in the embodiment shown on figure 1, configured to communicate with the tractor ECU 4. These obstacle sensors 6 are configured to detect an obstacle 7 around the work vehicle 1 in a front zone 8, a rear zone 9 and/or side zones 10. These obstacle sensors 6 may be any sensor having the ability to detect the obstacles 7 in the vicinity of tractor 1.

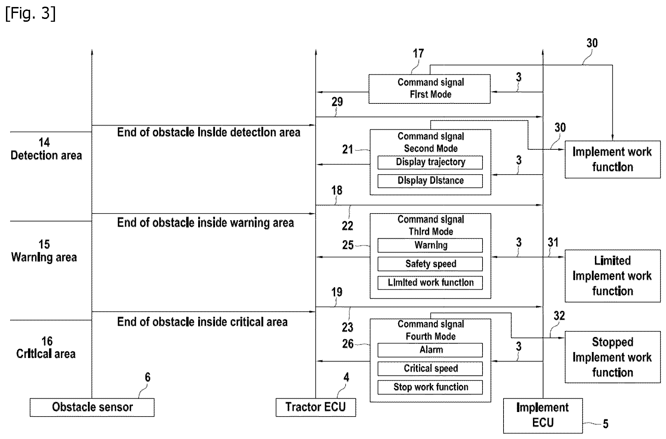

The tractor ECU 4, or the obstacle sensors 6, is configured to define a detection range 11, a warning range 12 and a critical range 13. These ranges 11, 12, and 13 define distances from tractor 1 corresponding to the limits of areas for which the implement ECU 5 is sending the command signal 3 for operating tractor 1 according to specific modes as described below in view of figures 2 and 3. A detection area 14 is defined between the detection range 11 and the warning range 12. A warning area 15 is defined between the critical range 13 and the warning range 12. A critical area 16 is defined for distances between tractor 1 and the critical range 13.

As implement 2 is unaware of the obstacle 7, the tractor ECU 4 is configured to send a corresponding signal when the obstacle 7 is detected by the obstacle sensor 6 in one of the detection area 11, warning area 12 or critical area 13. Indeed, without such a signal from the tractor ECU 4, the implement ECU 5 would continue to send the command signal 3 according to a first mode 17 (see figure 2 or 3) in which the tractor ECU 4 operates tractor 1 normally, according to usual functions used in normal situations, i.e. without obstacle 7 in the vicinity of tractor 11. Such a command signal 3 according to the first mode 17 while the obstacle 7 is in the vicinity of tractor 1 could lead to unsafe situations for both the tractor 1 and the obstacle 7.

Thus, according to the invention, the tractor ECU 4 sends an obstacle detection signal 18 to the implement ECU 5 when obstacle 7 is detected inside the detection area 14. The tractor ECU 4 sends an obstacle warning signal 19 to the implement ECU 5 when obstacle 7 is detected inside the warning area 15. The tractor ECU 4 sends an obstacle critical signal 20 to the implement ECU 5 when obstacle 7 is detected inside the critical area 16. As explained below in view of figure 2, the implement ECU 5 switches to a mode in which the command signal 3 ensures safety of both the tractor 1 and the obstacle 7. Especially, the command signal 3 is sent according to a mode defined as a function of the distance between tractor 1 and obstacle 7, i.e. in which area 14, 15 or 16 the obstacle 7 is detected.

Moreover, if the obstacle 7 is not detected anymore in one of the areas 14, 15 or 16, then the implement ECU also switches from sending the command signal 3 according to a corresponding mode to another mode for allowing tractor 1 to continue to perform farm work in safe conditions. Thus, the tractor ECU 4 sends an end of obstacle detection signal 29 to the implement ECU 5 when 7 obstacle is detected as moving out of the detection area 14. The tractor ECU 4 sends an end of obstacle warning signal 22 to the implement ECU 5 when obstacle 7 is detected as moving out of the warning area 15. The tractor ECU 4 sends an end of obstacle critical signal 23 when obstacle 7 is detected as moving out of the critical area 16.

Figure 2 shows a diagram in which the specific modes for operating tractor 1 are shown. In this embodiment, obstacle 7 is, given as an example, a bystander walking toward tractor 1 from beyond the detection range 11 to below the critical range 13 (see figure 1). The obstacle 7 given as a bystander below is an example however obstacle sensor 6 can detect any kind of obstacle 7 such as another vehicle or any other element, moving or not. Moreover, the description below generally refers to the obstacle sensor 6, but it should be understood that this obstacle sensor 6 may be a single obstacle sensor 6 or a plurality of obstacle sensors 6, the obstacle 7 being detected by at least one of said plurality of obstacle sensor 6.

In use, tractor 1 receives the command signal 3 from implement ECU 5. When no bystander is detected by the obstacle sensor 6, the implement ECU 5 generates the command signal 3 according to the first mode 17 to perform work farm or other work functions normally. In fact, in this first mode 17, the tractor ECU 4 operates tractor 1 according to instructions corresponding to usual command signal 3. Thus, a command signal 3 according to the first mode 17 may include any instruction to perform farm work, a speed command adapted for said farm work, steering instructions etc. For example, the command signal 3 may include instructions for performing some function related to farm work such as grass collect with a speed command defined at 5km/h, the tractor ECU 4 then operates the tractor 1 corresponding function with a speed corresponding to said speed command. Such a signal command 3 according to the first mode 17 may also include a function command signal 30 to perform farm work or other dedicated function for the implement 2, for example collect grass.

According to the invention, the tractor ECU 4 also operates the tractor 1 in said first mode 17 if the obstacle sensor 6 detects bystander 7 beyond the detection range 11. Indeed, if bystander 7 is located beyond the detection range 11, then there is no specific danger for either tractor 1 or bystander 7 and the tractor ECU 4 does not send any obstacle detection signal 18, 19 or 20 to the implement ECU 5.

When bystander 7 is moving toward tractor 1 and enters inside the detection area 14, then the obstacle sensor 6 detects the bystander 7 inside the detection area 14. Consequently, the obstacle sensor 6 sends a signal to the tractor ECU 4 corresponding to the detection of the bystander 7 inside the detection area 14. When receiving this signal, the tractor ECU 4 is configured to send the obstacle detection signal 18 to the implement ECU 5.

When receiving the obstacle detection signal 18, the implement ECU 5 switches from sending the command signal 3 according to the first mode 17 to sending the command signal 3 according to a second mode 21. The tractor ECU 4, which receives the command signal 3 according to said second mode 21, then operates the tractor 1 according to instructions of the command signal 3 according to said second mode 21.

In the detection area 14, bystander 7 is still far away from tractor 1 such that safety of both the tractor 1 and the bystander 7 is still ensured. Thus, the main goal of the second mode 21 is to alert an operator (not shown) that a bystander 7 is coming toward tractor 1 but, as no imminent risk is involved as bystander 7 is still far away from tractor 1, to continue to operate normally the tractor 1. In other words, the command signal 3 according to the second mode 21 includes the same instructions as the command signal 3 according to the first mode 17 for performing farm work, optionally including the function command signal 30, with additional functions aiming to alert the operator that an obstacle has been detected in the detection area 14.

In the embodiment shown on figure 2, the command signal 3 according to the second mode 21 mainly includes a display command to display data related to obstacle 7 on a display embedded in tractor 1.

For example, the command signal 3 according to the second mode 21 include an instruction to display on the display the distance between tractor 1 and bystander 7, a trajectory of bystander 7, a moving speed of bystander 7 or any other relevant information regarding bystander 7.

Tractor 1 is still operated according to the main functions of the command signal 3 according to the first mode 17 such has performing farm work, steering instruction etc., but the operator is now aware that the bystander 7 is detected in the detection area 14 and therefore the operator could decide to take any action accordingly. However, as long as no action is taken by the operator, the tractor ECU 4 continues to operate tractor 1 automatically as a function of the command signal 3 according to the second mode 21 received from implement ECU 5.

If bystander 7 continues to move toward tractor 1 and enters inside the warning area 15, then the obstacle sensor 6 sends a corresponding signal to the tractor ECU 4 and the tractor ECU 4 sends the obstacle warning signal 19 to the implement ECU 5, corresponding to the detection of the bystander 7 inside the warning area 15. When receiving this obstacle warning signal 19, the implement ECU 5 switches from sending the command signal 3 according to the second mode 21 to sending the command signal 3 according to a third mode 25. In this third mode 25, bystander 7 is closer to tractor 1 such that tractor 1 must be operated carefully in order to automatically avoid any dangerous situation. Indeed, if the tractor ECU 4 operates tractor 1 with a command signal 3 according to first mode 17 or second mode 21, a dangerous situation such as a collision and/or damage could occur as bystander 7 is coming toward said tractor 1.

Thus, the command signal 3 according to third mode 25 is configured to ensure safety of both the tractor 1 and the bystander 7. In the embodiment shown in figure 2, and given as an example, the implement ECU 5 defines in the third mode 25 a safety speed. This safety speed is preferably lower than the speed command according to the first mode 17 and may be a fixed target speed or a ratio for example. As an example, the safety speed may be a fixed speed of 1km/h. Alternatively, the safety speed may be a ratio of 10%, the safety speed then being 10% of the speed command according to the first mode 17.

Moreover, the command signal 3 may include a parameter defining if this safety speed is applied immediately by the tractor ECU 4 or progressively, the tractor ECU 4 progressively slowing down the tractor speed from the current speed to the safety speed.

Moreover, in the third mode 25, the command signal may include a warning command, the tractor ECU 4 being configured to emit a warning through a warning device embedded in the tractor 1 in response to said warning command. Such warning may be any kind of signal such as a sound signal, a light signal or any other kind of signal intended to alert the operator and/or bystander 7 of the danger.

The third mode 25 may also include information to the operator to avoid danger. For example, the command signal 3 may include a display command such that the tractor ECU 4 display a trajectory to avoid bystander 7 for such that the operator could manually drive tractor 1 to avoid bystander 7 according to said avoiding trajectory.

The command signal may include any instruction of the second mode 21 such that the tractor ECU 4 continue to use, i.e. display, the second mode 21 functions informing the operator such that the distance between tractor 1 and bystander 6, trajectory of the bystander 6, etc.

If command signal 3 comprises instructions to perform farm work functions by the implement 2 or the tractor 1, for example the function command signal 30 in first and/or second mode, the third mode 25 may include a limited function command signal 31 for limiting these functions to ensure safety of both the tractor 1 and the bystander 7. This limitation could include not applying the instruction according to the first mode 17 and/or using alternative working functions such as a limited movement of the part of the tractor 1 dedicated to performing said work function.

If bystander 7 still moves toward tractor 1 and enters inside critical area 16, then the obstacle sensor 5 sends a signal to the tractor ECU 4 corresponding to the detection of the bystander 7 inside the critical area 16. When receiving this signal, the tractor ECU 4 sends the obstacle critical signal 20 to the implement ECU 5. The implement ECU 5 sends the command signal 3 according to a fourth mode 26 in response to the reception of said obstacle critical signal 20.

In this fourth mode 26, bystander 7 is so close to tractor 1 that the tractor 1 main functions must be stopped to avoid any imminent dangerous situation. Indeed, if the tractor ECU 4 applies the instructions according to first mode 17, an accident such as a collision could occur.

The command signal may include a critical speed. This critical speed is a speed which does not involve collision between bystander 7 and tractor 1. The critical speed is, for example, a standstill speed, the tractor 1 minimum speed or a zero speed (0.00 km/h). Preferably, once tactor 1 is stopped, an assisted parking brake is automatically engaged in fourth mode 26.

If command signal 3 comprises instructions to perform farm work functions by the implement 2 or the tractor 1, for example the function command signal 30 in first and/or second mode, the fourth mode 25 may include a stop function command signal 32 for stopping the corresponding function to ensure safety of both the tractor 1 and the bystander 7.

In the TIM system, it is contemplated that the obstacle signal may be continuously communicated by the tractor ECU 4 to the implement ECU 5. This obstacle signal may be communicated to the implement ECU 5 even if no obstacle is detected, data corresponding to a "no obstacle detected" being used by the implement ECU 5 to select the command signal 3 according to the first mode 17. Alternatively, the obstacle signal could be communicated to the implement ECU 5 only when the obstacle 7 is detected, the command signal 3 being send by the implement ECU 5 according to the first mode 17 as long as no obstacle detection signal 18, obstacle warning signal 19 or obstacle critical signal 20 is received from the tractor ECU 4.

It should be understood that although four modes of operation for sending the command signal 3 are disclosed herein, the implement ECU 5 could send the command signal 3 according to more than four modes or less than four modes. For example, the implement ECU 5 could send the command signal 3 using only the third mode 25 and fourth mode 26 above described, i.e. without using the obstacle detection signal 18. In another example, an additional mode could be implemented to perform other safety functions between the third mode 25 and the fourth mode 26 as above described.

Figure 3 shows a diagram in which the bystander 7 detected inside critical area 16 is moving away from tractor 1 from critical area 16 to outside the detection area 14.

As explained above, in the fourth mode 26, bystander 7 is inside the critical area 16. As long as the implement ECU 5 does not receive an end of obstacle critical detection signal 23 corresponding to the obstacle sensor 5 detecting the bystander moving out from the critical area 16, the implement ECU continues to send the command signal 3 according to the fourth mode 26. When the obstacle sensor 6 detects that the bystander 7 is moving out of the critical area 16, the obstacle sensor sends a corresponding signal to the tractor Ecu 4 and the tractor ECU 4 sends the end of obstacle critical signal 23 to the implement ECU 5.

In the embodiment shown on figure 3, the tractor ECU 4 sends simultaneously the end of obstacle critical signal 23 and the obstacle warning signal 19 as the bystander 7 is detected as moving out of the critical area 16 but remains in the warning area 15. Consequently, the implement ECU 5 switches from sending the command signal 3 according to the fourth mode 26 to sending the command signal 3 according to the third mode 25 in response to both the end of obstacle critical signal 23 reception and the obstacle warning signal 19 reception.

In non-shown embodiments, the command signal 3 may be sent according to the mode previously used, i.e. before sending the command signal 3 according to the fourth mode 26.

Similarly, when the bystander 7 is detected as moving out of the warning area 15 to the detection area 14, the tractor ECU 4 sends simultaneously an end of obstacle warning signal 22 and the obstacle detection signal 18. Thus, the implement ECU 5 switches from sending the command signal 3 according to the third mode 25 to sending the command signal 3 according to the second mode 21.

When bystander 7 is detected as moving out of the detection area 14, the tractor ECU 4 sends an end of obstacle detection signal 29. Thus, the implement ECU 5 switches from sending the command signal 3 according to the second mode 21 to sending the command signal 3 according to the first mode 17.

In an embodiment, any switch from one mode to another one when bystander 7 moves away from tractor 1 may depend on an operator approval, for instance by an actuator allowing the operator to give his approval for switching from one mode to another one. Such an approval requirement is particularly useful when the command signal 3 is according to the fourth mode 26 as, in said fourth mode 26, bystander 7 is very close to the tractor 1 and an imminent danger is involved if the tractor ECU 4 operates tractor 1 to start again said tractor 1. Such an actuator may be a mechanical-type button, capacitive touch sensor-type button/user interface (UI) button, voice recognition-type control, or gesture recognition-type control configured to communicate with the tractor ECU 4. Additionally, or alternatively, the actuator may be a pedal configured to communicate with the tractor ECU 4. In this manner, the actuator allows for a requirement of input from the operator transmitted from said actuator to the implement ECU 5 in order to switch the command signal 3 from the fourth mode 26 to another mode involving an action of tractor 1. However, switching from one mode to another one when bystander 7 moves away from tractor 1 may be automatically performed as the obstacle sensor 5 informs the tractor ECU 4 which sends the corresponding signal to the implement ECU 5 that said bystander 6 is not in a dangerous area anymore.

Although the embodiments are described with reference to specific examples, it should be understood that modifications and changes may be made to these examples without going beyond the general scope as defined by the claims. In particular, individual characteristics of the various embodiments shown and/or mentioned herein may be combined in additional embodiments. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary. As an example, there may be a plurality of implements, each implement being dedicated to a corresponding work function of the work vehcile. For instance, a first implement could be dedicated to speed commands and/or curvature commands, a second implement could be dedicated to FPTO function, and a third implement could be dedicated to RPTO function, the tractor sending the obstacle detection signal, the warning detection signal and/or the obstacle critical signal to one, a plurality or each implement. In another example, a first implement may be dedicated to speed commands and/or curvature commands of a work vehicle, said work vehicle comprising a tractor and an attached agricultural machine, and a second implement may be the agricultural machine itself sending a command signal to the tractor to monitor RPTO rpm of said tractor.

In the present description, the control units, for instance the vehicle electronic control unit, may be specially constructed for the required purposes, or the control devices may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memory (ROM), random access memory (RAM), erasable programmable read-only memory (EPROM), electrically erasable programmable read-only memory (EEPROM), magnetic or optical cards, reduced instruction set computer (RISC), application specific integrated circuit (ASIC), or any type of media suitable for storing electronic instructions, and each coupled to a computer system bus. Furthermore, the computers referred to herein may include a single processor or architectures employing multiple processor designs for increased computing capability.

Additionally, all of the disclosed features of the work vehicle may be transposed, alone or in combination, to a method and/or an apparatus and vice versa.

## Claims

1. A work machine (2) configured to operate in combination with a work vehicle (1), the work machine (2) comprising a work machine electronic control unit (5) configured to send a command signal (3) according to a first mode (17) to the work vehicle (1), the work vehicle (1) being configured to be operated according to said command signal (3),
wherein the work machine electronic control unit (5) is configured to receive an obstacle detection signal (18) , said obstacle detection signal (18) corresponding to a detection of an obstacle (7) in a detection area (14) around the work vehicle (1), and to send the command signal (3) according to a second mode (21) in response to reception of the obstacle detection signal (18).

2. The work machine (2) according to claim 1, wherein the command signal (3) according to the second mode (21) comprises a display instruction.

3. The work machine (2) according to claim 1 or 2, wherein the work machine electronic control unit (5) is configured to switch from sending the command signal (3) according to the second mode (21) to sending the command signal (3) according to the first mode (17) in response to an end of obstacle detection signal (29) reception.

4. The work machine (2) according to any one of claims 1 to 3, wherein the work machine electronic control unit (5) is configured to receive an obstacle warning signal (19), said obstacle warning signal (19) corresponding to a detection of the obstacle (7) in a warning area (15) included in the detection area (14), and to send the command signal (3) according to a third mode (25) in response to reception of the obstacle warning signal (19).

5. The work machine (2) according to claim 4, wherein the command signal (3) according to the third mode (25) comprises a safe speed command.

6. The work machine (2) according to claim 4 or 5, wherein the command signal (3) according to the third mode (25) comprises a warning command.

7. The work machine (2) according to any one of claims 4 to 6, wherein the work machine (2) is configured to perform a dedicated work (30), and wherein the work machine electronic control unit (5) is configured to perform said dedicated work in a limited mode in response to the reception of the obstacle warning signal (19).

8. The work machine (2) according to any one of claims 4 to 7, wherein the work machine electronic control unit (5) is configured to switch from sending the command signal (3) according to the third mode (25) to sending the signal according to the second mode (21) in response to an end of obstacle warning signal (22) reception.

9. The work machine (2) according to any one of claims 4 to 8, the work machine electronic control unit (5) is configured to receive an obstacle critical signal (20) said obstacle critical signal (20) corresponding to a detection of the obstacle (7) in a critical area (16) included in the warning area (15), and to send the command signal (3) according to a fourth mode (26) in response to reception of the obstacle critical signal (20).

10. The work machine (2) according to claim 9, wherein the command signal (3) comprises a critical speed command in the fourth mode (26).

11. The work machine (2) according to claim 9 or 10, wherein the work machine (2) is configured to perform a dedicated work (30), and wherein the work machine electronic control unit (5) is configured to perform said dedicated work in a critical mode in response to the reception of the obstacle critical signal (20).

12. The work machine (2) according to any one of claims 9 to 11, wherein the work machine electronic control unit (5) is configured to switch from sending the command signal (3) according to the fourth mode (26) to sending the signal according to the third mode (25) in response to an end of obstacle critical signal (23) reception.

13. A method for operating a work vehicle (1) in a tractor implement management system, the work vehicle (1) comprising a vehicle electronic control unit (4), wherein the method comprises,
- providing a work machine (2), said work machine comprising a work machine electronic control unit (5) configured to communicate with the vehicle electronic control unit (4), the work machine (2) being configured to send a signal command (3) according to a first mode (17) to the work vehicle (1),
- receiving an obstacle detection signal (18) in the work machine electronic control unit (5), said obstacle detection signal (18) corresponding to a detection of an obstacle (7) in a detection area (14) around the work vehicle (1),
- sending the signal command (3) according to a second mode (21) from the work machine electronic control unit (5) to the work vehicle (1).

14. The method according to claim 13 in a tractor implement management system, the method comprising:
- receiving an obstacle warning signal (19) in the work machine electronic control unit (5), said obstacle warning signal (19) corresponding to a detection of the obstacle (7) in a warning area (15) included in the detection area (14),
- sending the signal command (3) according to a third mode (25) from the work machine electronic control unit (5) to the work vehicle (1).

15. The method according to claim 13 or 14 in a tractor implement management system, the method comprising:
- receiving an obstacle critical signal (20) in the work machine electronic control unit (5), said obstacle critical signal (20) corresponding to a detection of the obstacle (7) in a critical area (16) in the warning area (15),
- sending the signal command (3) according to a fourth mode (26) from the work machine electronic control unit (5) to the work vehicle (1).
